# EUROPEAN PATENT SPECIFICATION

(11) **EP 4 091 913 B1**
(45) Date of publication and mention of the grant of the patent: **20.03.2024**
(21) Application number: 22174030.1
(22) Date of filing: 18.05.2022
(51) Int. Cl.: B62D 17/00, B62D 7/20

(54) **ASSEMBLY CONFIGURED TO CO-OPERATE WITH A STEERING ROD ADJUSTMENT TOOL FOR ADJUSTING A LENGTH OF A STEERING ROD IN A STEERING GEAR ASSEMBLY OF A VEHICLE.**
ANORDNUNG, UM MIT EINEM LENKSTANGENEINSTELLWERKZEUG ZUSAMMENZUARBEITEN, ZUM EINSTELLEN EINER LÄNGE EINER LENKSTANGE IN EINER LENKGETRIEBEBAUGRUPPE EINES FAHRZEUGS.
ENSEMBLE CONFIGURÉ POUR COOPÉRER AVEC UN OUTIL DE RÉGLAGE DE BARRE DE DIRECTION POUR RÉGLER LA LONGUEUR D'UNE BARRE DE DIRECTION DANS UN ENSEMBLE DE BOÎTIER DE DIRECTION D'UN VÉHICULE.

(30) Priority: 19.05.2021 NL 2028242
(43) Date of publication of application: 23.11.2022
(73) Proprietor: DAF Trucks N.V., 5643 TW Eindhoven (NL)
(72) Inventor: KOOT, Joannes Arnoldus, 5643 TW Eindhoven (NL)
(74) Representative: V.O.

(56) References cited:
- DE-A1-102016 200 296
- US-A- 6 074 125
- US-A1- 2004 028 468
- US-A1- 2013 156 498

## Description

### FIELD

The invention relates to an assembly configured to co-operate with a steering rod adjustment tool for adjusting a length of a steering rod in a steering gear assembly of a vehicle.

### BACKGROUND

The steering gear assembly of a vehicle, such as a car or truck, usually comprises a steering rod between the steering column and the steering knuckle as known from US6074125 A. The length of the steering rod can be adjusted by rotating an adjustment part of the steering rod, so that the steering knuckles, and thus the wheels, can be aligned. Specialized steering rod adjustment tools are available to rotate the adjustment part of the steering rod. Such a steering rod adjustment tool may comprise a frame having arms defining an u-shaped opening configured to receive an adjustment part of the steering rod. The steering rod adjustment tool may further comprise an engagement part rotatable with respect to the frame and is configured to engage the steering rod adjustment part. A rotation of the engagement part with respect to the tool frame may thus result in a rotation of the steering rod adjustment part, thereby adjusting the length of the steering rod.

For the steering rod adjustment tool to be able to engage the steering rod adjustment part, the steering rod adjustment part has to have a correct rotational orientation with respect to the u-shaped opening of the steering rod adjustment tool. Since access to the steering rod and the steering rod adjustment part is limited in a vehicle, the steering rod adjustment tool can typically engage the steering rod adjustment part from a limited access angle, or within a small range of different access angles. This means that the adjustment part may be in the wrong rotational position for engagement with the steering rod engagement tool and the steering rod adjustment tool cannot be used.

### SUMMARY

An object of the invention is to provide a solution to the above mentioned problem. To that end, the invention provides an assembly configured to co-operate with a steering rod adjustment tool for adjusting a length of a steering rod in a steering gear assembly of a vehicle. More particularly, the invention provides an assembly comprising a connector element and a steering rod. The steering rod comprises an adjustment part which is rotatable around a longitudinal steering rod axis. The connector element comprises a body and is configured to be clenched around the adjustment part of the steering rod. The connector element has a circumferential outer wall comprising a plurality of substantially planar contact surfaces which are angled with respect to each other. The plurality of contact surfaces are configured to engage the steering rod adjustment tool such that the steering rod adjustment tool can apply a moment or torque to the connector element.

With the assembly according to the invention, the steering rod adjustment tool does not directly engage the adjustment part of the steering rod, but engages the contact surfaces of the connector element. This means the steering rod adjustment tool can engage the connector element in a substantially linear movement fashion, and is able to set the length of the steering rod by rotating the engagement part of the adjustment tool while keeping the adjustment tool steady with respect to the steering rod.

The outer circumference of the connector element may e.g. form a hexagonal cross section. This means the steering rod adjustment tool only needs access angle adjustments in a range of < 30°.

The connector element may comprise a first and a second connector element part which are pivotable with respect to each other. The connector element may have a closed position in which the connector element is configured to be clenched around the adjustment part of the steering rod e.g. by having an inner wall circumference that can be adapted to close fit an outer shape of the steering rod adjustment part. The connector element may also have an open position in which first ends of the first and the second connector element parts are spaced apart, in which open position the connector element may be moved towards and around the steering rod or away from the steering rod.

In the open position, the connector element may be attached to or removed from the adjustment part of the steering rod, while in the closed position, the connector element remains clenched around the adjustment part.

The first and the second connector element parts may at second ends thereof be joined together by a flexible hinge element. The flexible hinge element may adjoin and confine the two connector elements parts e.g. by means of a strip forming one of the contact surfaces for engagement when the connector element is in the closed position. The flexible hinge element may bias the connector element towards the closed position.

The flexible strip element may thus function as a hinge for the two connector element parts.

The first end of the first adaptor part may comprise a locking element, and the first end of the second adaptor part may comprise a snap-in area. Together the locking element and snap-in area may form a snap-fit connection.

A snap-fit connection provides a quick way to adjoint the two parts without need of any fastener, such as screws or bolts, or adhesive.

The first ends of the first and second connector element parts may be opposite the second ends of their respective connector element part.

The connector element may comprise an engagement flange adjacent the circumferential outer wall. The engagement flange may have an outer diameter which is greater than a diameter of the circumferential outer wall.

The engagement flange may be used to guide the steering rod engagement tool. When the steering rod engagement tool engages the contact surfaces of the circumferential outer wall, the steering rod adjustment tool may abut the engagement flange. An operator of the steering rod adjustment tool would than know that the steering rod adjustment tool is in the right position for engaging the connector element. Also the engagement flange will prevent the steering rod adjustment tool from sliding of the contact surfaces.

The connector element may comprise a confinement flange for confining movement of the connector element with respect to the steering rod in an axial direction of the steering rod. The confinement flange may have an inner diameter which is smaller than an outer diameter of the adjustment part of the steering rod.

When the connector element is in the closed position, the only possible movement is along the axial direction of the steering rod. Because the inner diameter of the confinement flange is smaller than the outer diameter of the adjustment part, the confinement flange may catch behind the adjustment part. The confinement flange thus confines the adjustment part and prevents the connector element to move with respect to the adjustment part in the axial direction of the steering rod.

The connector element may be monolithic and it may be 3D printed. It may e.g. be made of a plastic.

The assembly according to the invention may further comprise the steering rod adjustment tool. The steering rod adjustment tool may comprise a frame having arms defining an u-shaped opening configured to receive the connector element. The steering rod adjustment tool may further comprise an engagement part rotatable with respect to the frame. The engagement part may be configured to engage at least two contact surfaces of the connector element. A rotation of the engagement part with respect to the steering rod adjustment tool frame may result in the steering rod adjustment tool applying a moment or torque to the connector element. The engagement part may have a crescent shape, wherein an inner surface of the engagement part may match the circumferential outer wall of the connector element.

The steering rod adjustment tool may be moved to connector element so that the u-shaped opening can receive the connector element and the engagement part can engage the contact surfaces. The connector element may then be rotated by the movement of the engagement part. This means that no further movement of the steering rod adjustment tool is needed. Thus also with the smallest access angle to reach the steering rod, is still is possible the adjust said steering rod.

The present invention will be further elucidated with reference to figures of an example in which various embodiments of the invention are incorporated. The embodiments may be combined or may be applied separately from each other.

### BRIEF DESCRIPTION OF THE FIGURES

Figure 1 shows an example of an assembly according to the invention;
Figure 2a shows an example of a connector element according to the invention in a closed position;
Figure 2b shows the example of the connector element in an open position;
Figure 3 shows a schematic cut-through view of the example of figure 1; and
Figure 4 shows an example of a steering rod adjustment tool.

### DETAILED DESCRIPTION

In this application similar or corresponding features are denoted by similar or corresponding reference signs. The description of the various embodiments is not limited to the examples shown in the figures and the reference numbers used in the detailed description and the claims are not intended to limit the description of the embodiments, but are included to elucidate the embodiments by referring to the example shown in the figures.

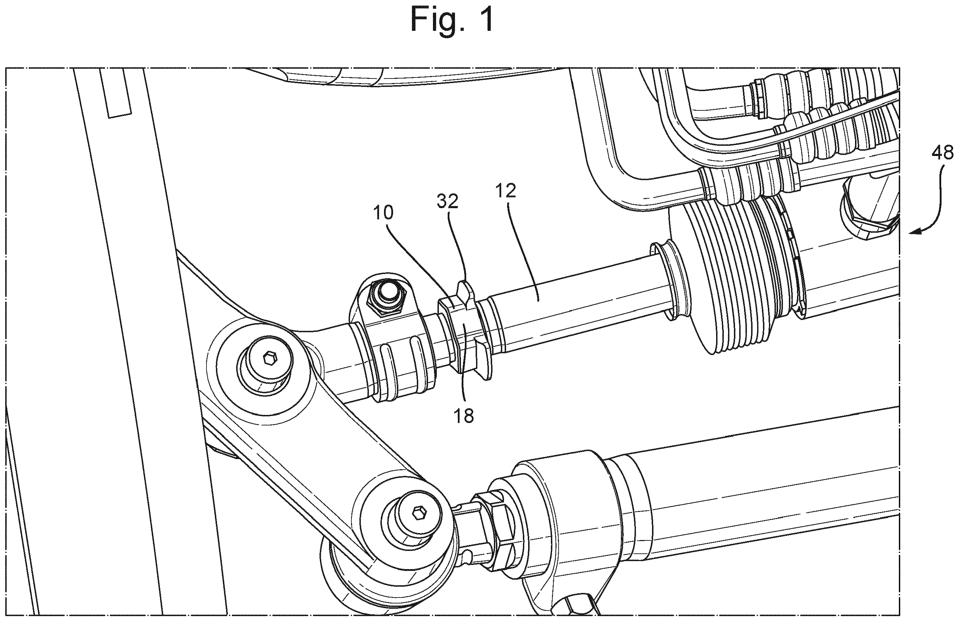

In the most general terms, the invention relates to an assembly configured to co-operate with a steering rod adjustment tool 36 for adjusting a length of a steering rod 12 in a steering gear assembly 48 of a vehicle. An example of such an assembly is shown in figure 1. The assembly comprises a connector element 10 and a steering rod 12. The steering rod 12 comprises an adjustment part 14 which is rotatable around a longitudinal steering rod axis. The connector element 10 comprises a body 16 and is configured to be clenched around the adjustment part 14 of the steering rod 12. The connector element 10 has a circumferential outer wall 18 comprising a plurality of substantially planar contact surfaces 20 which are angled with respect to each other. The plurality of substantially planar contact surfaces 20 are configured to engage the steering rod adjustment tool 36 such that the steering rod adjustment tool 36 can apply a moment or torque to the connector element 10.

The effects and advantages of the assembly have been described in the summary section and these effects and advantages are inserted here by reference.

In an embodiment, of which an example is shown in figures 1-3, the connector element 10 comprises a first and a second connector element part 10a, 10b which are pivotable with respect to each other, wherein the connector element 10 has a closed position in which the connector element 10 is configured to be clenched around the adjustment part 14 of the steering rod 12, and wherein the connector element 10 has an open position in which first ends 22 of the first and the second connector element parts 10a, 10b are spaced apart, in which open position the connector element 10 may be moved towards and around the steering rod 12 or away from the steering rod 12.

The connector element 10 may be configured to be clenched around the adjustment part 14 of the steering rod by having an inner wall circumference 19 that can be adapted to shape fit an outer shape of the steering rod adjustment. The shape of the inner wall circumference 19 can thus be made to match an outer shape of the adjustment part 14. In this way the connector element 10 can be securely clenched to the adjustment part 14 without slipping, e.g. when a moment or torque is applied to the connector element 10. The inner wall circumference 19 may be made of a deformable material, e.g. a foam which is flexible enough to adapt to the shape of the adjustment part 14 but also firm enough for the connector element 10 to be clenched to the adjustment part 14. The inner wall circumference 19 may also be made to match the outer shaped of the adjustment part 14, to form the shape fit connection e.g. when the latter shape is known.

The first and the second connector element parts 10a, 10b at second ends 24 thereof may be joined together by a flexible strip element 26. The flexible strip element 26 adjoins and confines the two connector elements parts 10a, 10b when the connector element is in the closed position. The flexible strip element 26 may bias the connector element 10 towards the closed position.

The first end 22 of the first adaptor part 10a may comprise a locking element 28, and the first end 22 of the second adaptor part 10b may comprise a snap-in area 30. Together the locking element 28 and snap-in area 30 form a snap-fit connection. The first ends 22 of the first and second connector element parts 10a, 10b may be opposite the second ends 24 of their respective connector element part 10a, 10b.

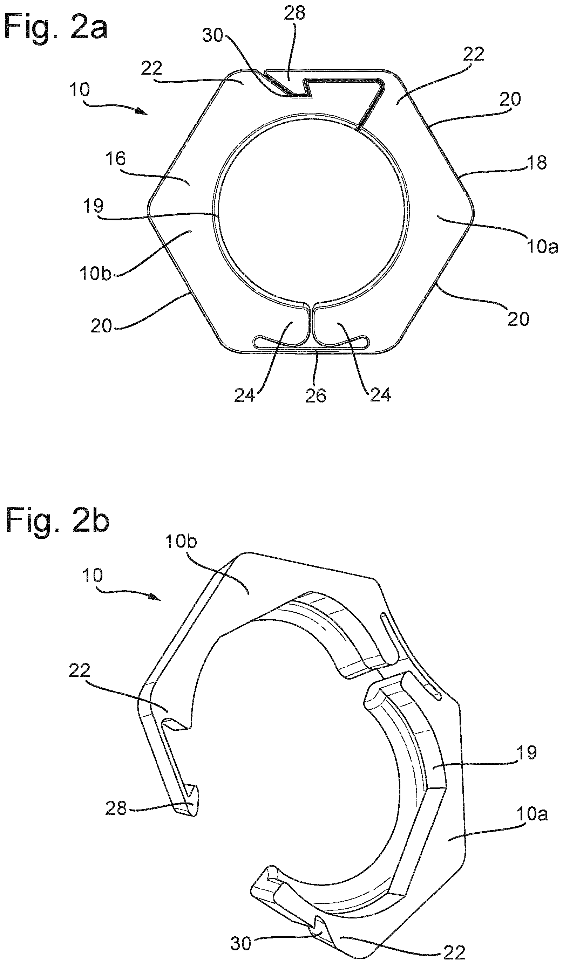

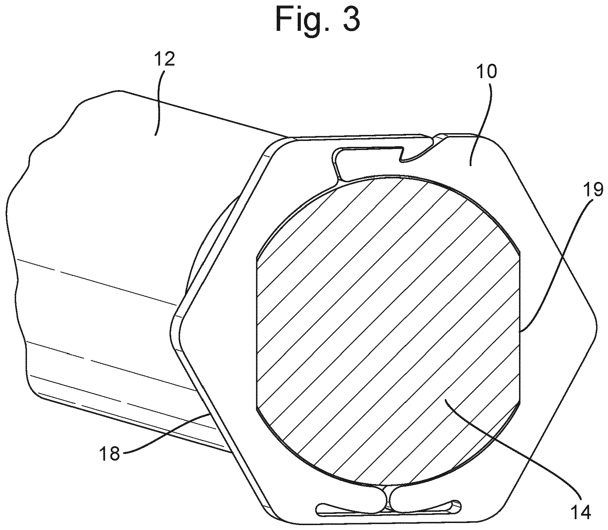

In order to attach the connector element 10 to the adjustment part 14 of the steering rod 12 the two parts 10a, 10b of the connector element 10 may be put in the open position. When the first ends 22 of the connector element parts 10a, 10b are spaced apart, the adjustment part 14 of the steering rod 12 may be moved between said ends 22 to that the connector element 10 can envelope the adjustment part 14. The adjustment part 14 can have different shapes. It can have a hexagonal shape, such as the circumferential outer wall 18 of the connector element 10. It may also have two flattened part in an otherwise round steering rod 12, as is shown in the cut-through view of the example in figure 3. The flexible strip element 26 functions as a hinge for the two connector element parts 10a, 10b, so that after the connector element parts 10a, 10b are placed around the adjustment part 14, the first ends 22 of the ring parts 10a, 10b may be moved towards each other in order to set the connector element 10 in the closed position. As can be seen in figures 2 and 3, the flexible strip element 26 holds the second ends 24 of the ring parts 10a, 10b together when the connector element 10 is in the closed position. The moment of torque applied to the adaptor 10 will than mainly be intercepted by these ring parts 10a, 10b and not by the flexible strip element 26. Also, the flexible strip element provides one of the contact surfaces 20 for engagement with the steering rod adjustment tool 36. On the other end of the connector element 10, the snap-fit connection keeps the connector element parts 10a, 10b together, when the connector element 10 is in the closed position. A snap-fit connection provides a quick way to adjoint the two parts 10a, 10b. It does not need any fastener, such as screws or bolts, or adhesive.

In an embodiment, of which an example is shown in figure 1, the connector element 10 comprises an engagement flange 32 adjacent the circumferential outer wall 18. The engagement flange 32 has an outer diameter which is greater than a diameter of the circumferential outer wall 18.

The engagement flange 32 facilitates the engagement of the steering rod engagement tool 36 with the connector element 10. The engagement flange 32 may be used to guide the steering rod engagement tool 36. When the steering rod engagement tool 36 engages the contact surfaces 20 of the circumferential outer wall 18, the steering rod adjustment tool 36 may abut the engagement flange 32. An operator of the steering rod adjustment tool 36 would than know that the steering rod adjustment tool 36 is in the right position for engaging the connector element 10. Also the engagement flange 32 will prevent the steering rod adjustment tool 36 from sliding off the contact surfaces.

In an embodiment, which is not shown in the figures, he connector element 10 comprises a confinement flange for confining movement of the connector element 10 with respect to the steering rod 12 in an axial direction of the steering rod 12. The confinement flange has an inner diameter which is smaller than an outer diameter of the adjustment part 14 of the steering rod 12.

When the connector element 10 is in the closed position, the only possible movement is along the axial direction of the steering rod 10. Because the inner diameter of the confinement flange is smaller than the outer diameter of the adjustment part 14, the confinement flange may be hooked behind the adjustment part 14. The confinement flange 24 thus confines the adjustment part 14 and prevents the connector element 10 to move with respect to the adjustment part 14 in the axial direction of the steering rod 10.

In an embodiment, of which an example is shown in figures 2 and 3, the connector element 10 comprises six contact surfaces 20 which, when viewed in an axial direction of the connector element 10, form a hexagonal cross section of the connector element 10.

In this embodiment, the connector element 10 takes the shape of a standard nut. The circumferential outer wall 18 is radial symmetric over an angle of 60°. This means the steering rod adjustment tool only needs an access angle in the range of 60°.

In an embodiment the connector element 10 is monolithic, and the connector element may be 3D printed.

Such a connector element 10 may be easily fabricated. 3D printing provides an accurate product, which is cost effective, especially in low quantities.

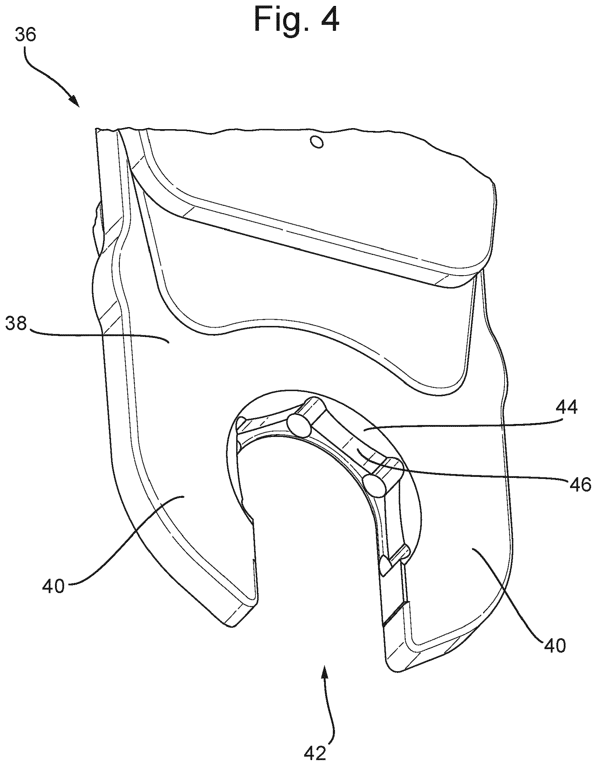

In an embodiment the assembly further comprising the steering rod adjustment tool 36, of which an example is shown in figure 4. The steering rod adjustment tool 36 comprises a frame 38 having arms 40 defining an u-shaped opening 42 configured to receive the connector element 10. The steering rod adjustment tool 36 further comprises an engagement part 44 rotatable with respect to the frame 38. The engagement part 44 is configured to engage at least two contact surfaces 20 of the connector element 10. A rotation of the engagement part 44 with respect to the steering rod adjustment tool frame 38 results in the steering rod adjustment tool 36 applying a moment or torque to the connector element 10. The engagement part 44 may have a crescent shape. An inner surface 46 of the engagement part may match the circumferential outer wall 18 of the connector element 10.

The steering rod adjustment tool 36 may be moved to connector element 10 so that the u-shaped opening can receive the connector element 10 and the engagement part 44 can engage the contact surfaces 20. The connector element 10 may then be rotated by the movement of the engagement part 44. This means that no further movement of the steering rod adjustment tool 36 is needed. Thus also with the smallest access angle to reach the steering rod 10, is still is possible the adjust said steering rod 10. As shown in figure 4, the inner surface 46 of the engagement part 44 has four parts which are angled with respect to each other. These parts match the contour or shape of the circumferential wall 18 of the adaptor 10 shown in figures 2 and 3. Because of this match the possibility of transferring moment or torque from the engagement part 44 to the connector element 10 is greatly enhanced.

The various embodiments which are described above may be used implemented independently from one another and may be combined with one another in various ways. The reference numbers used in the detailed description and the claims do not limit the description of the embodiments nor do they limit the claims. The reference numbers are solely used to clarify by referring to the non-limiting example in the figures.

### Legend

10 - connector element
10a - first connector element part
10b - second connector element part
12 - steering rod
14 - adjustment part
16 - body
18 - circumferential outer wall
19 - inner wall circumference
20 - contact surface
22 - first end (of the first/second connector element part)
24 - second end (of the first/second connector element part)
26 - flexible strip element
28 - locking element
30 - snap-in area
32 -engagement flange
36 - steering rod adjustment tool
38 - steering rod adjustment tool frame
40 - arm
42 - u-shaped opening
44 - engagement part
46 - inner surface (of the engagement part)
48 - steering gear assembly

## Claims

1. An assembly configured to co-operate with a steering rod adjustment tool (36) for adjusting a length of a steering rod (12) in a steering gear assembly (48) of a vehicle,
wherein the assembly comprises a connector element (10) and a steering rod (12),
wherein the steering rod (12) comprises an adjustment part (14) which is rotatable around a longitudinal steering rod axis,
**characterized in that** the connector element (10) comprises a body (16) configured to be clenched around the adjustment part (14) of the steering rod (12), and wherein the connector element (10) has a circumferential outer wall (18) comprising a plurality of substantially planar contact surfaces (20) which are angled with respect to each other and are configured to engage the steering rod adjustment tool (36) such that the steering rod adjustment tool (36) can apply a moment or torque to the connector element (10).

2. The assembly according to claim 1, wherein the connector element (10) has an inner wall circumference (19) that can be adapted to shape fit an outer shape of the steering rod adjustment part (14).

3. The assembly according to claim 1 or 2, wherein the connector element (10) comprises a first and a second connector element part (10a, 10b) which are pivotable with respect to each other, wherein the connector element (10) has a closed position in which the connector element (10) is configured to be clenched around the adjustment part (14) of the steering rod (12), and wherein the connector element (10) has an open position in which first ends (22) of the first and the second connector element parts (10a, 10b) are spaced apart, in which open position the connector element (10) may be moved towards and around the steering rod (12) or away from the steering rod (12).

4. The assembly according to claim 3, wherein the first and the second connector element parts (10a, 10b) at second ends (24) thereof are joined together by a flexible strip element (26), wherein the flexible strip element (26) adjoins and confines the two connector elements parts (10a, 10b) when the connector element is in the closed position, and wherein the flexible strip element (26) biases the connector element (10) towards the closed position.

5. The assembly according to claims 3 or 4, wherein the first end (22) of the first adaptor part (10a) comprises a locking element (28), and wherein the first end (22) of the second adaptor part (10b) comprises a snap-in area (30), wherein the locking element (28) and snap-in area (30) together form a snap-fit connection.

6. The assembly according to claim 4 or 5, wherein the first ends (22) of the first and second connector element parts (10a, 10b) are opposite the second ends (24) of their respective connector element part (10a, 10b).

7. The assembly according to any one of the preceding claims, wherein the connector element (10) comprises an engagement flange (32) adjacent the circumferential outer wall (18), and having an outer diameter which is greater than a diameter of the circumferential outer wall (18).

8. The assembly according to any one of the preceding claims, wherein the connector element (10) comprises a confinement flange for confining movement of the connector element (10) with respect to the steering rod (12) in an axial direction of the steering rod (12), and wherein the confinement flange has an inner diameter which is smaller than an outer diameter of the adjustment part (14) of the steering rod (12).

9. The assembly according to any one of the preceding claims, wherein the connector element (10) comprises six contact surfaces (20) which, when viewed in an axial direction of the connector element (10), form a hexagonal cross section of the connector element (10).

10. The assembly according to any one of the preceding claims, wherein the connector element (10) is monolithic.

11. The assembly according to claim 10, wherein the connector element is 3D printed.

12. The assembly according to any one of the preceding claims, further comprising the steering rod adjustment tool (36).

13. The assembly according to claim 12, wherein the steering rod adjustment tool (36) comprises a frame (38) having arms (40) defining an u-shaped opening (42) configured to receive the connector element (10), wherein the steering rod adjustment tool (36) further comprises an engagement part (44) rotatable with respect to the frame (38), wherein the engagement part (44) is configured to engage at least two contact surfaces (20) of the connector element (10), and wherein a rotation of the engagement part (44) with respect to the steering rod adjustment tool frame (38) results in the steering rod adjustment tool (36) applying a moment or torque to the connector element (10).

14. The assembly according to claim 13, wherein the engagement part (44) has a crescent shape, wherein an inner surface (46) of the engagement part matches the circumferential outer wall (18) of the connector element (10).

## Patentansprüche

1. Baugruppe, die dazu ausgelegt ist, mit einem Lenkstangeneinstellwerkzeug (36) zusammenzuarbeiten, um eine Länge einer Lenkstange (12) in einer Lenkgetriebebaugruppe (48) eines Fahrzeugs einzustellen,
wobei die Baugruppe ein Verbinderelement (10) und eine Lenkstange (12) umfasst,
wobei die Lenkstange (12) einen Einstellteil (14) umfasst, der um eine Längsachse der Lenkstange gedreht werden kann,
**dadurch gekennzeichnet, dass** das Verbinderelement (10) einen Körper (16) umfasst, der dazu ausgelegt ist, um den Einstellteil (14) der Lenkstange (12) geklemmt zu werden, und wobei das Verbinderelement (10) eine Außenumfangswand (18) aufweist, die eine Mehrzahl von planaren Kontaktflächen (20) umfasst, die in Bezug aufeinander abgewinkelt und zum Eingreifen in das Lenkstangeneinstellwerkzeug (36) ausgelegt ist, sodass das Lenkstangeneinstellwerkzeug (36) ein Moment oder Drehmoment auf das Verbinderelement (10) ausüben kann.

2. Baugruppe nach Anspruch 1, wobei das Verbinderelement (10) einen Innenwandumfang (19) aufweist, der formschlüssig an eine äußere Form des Lenkstangeneinstellteils (14) angepasst werden kann.

3. Baugruppe nach Anspruch 1 oder 2, wobei das Verbinderelement (10) einen ersten und einen zweiten Verbinderelementteil (10, 10b) umfasst, die in Bezug aufeinander geschwenkt werden können, wobei das Verbinderelement (10) eine geschlossene Position aufweist, in der das Verbinderelement (10) ausgelegt ist, um den Einstellteil (14) der Lenkstange (12) geklemmt zu werden, und wobei das Verbinderelement (10) eine offene Position aufweist, in der erste Enden (22) des ersten und des zweiten Verbinderelementteils (10a, 10b) voneinander beabstandet sind, wobei das Verbinderelement (10) in der offenen Position zur Lenkstange (12) hin und darum herum oder von der Lenkstange (12) weg bewegt werden kann.

4. Baugruppe nach Anspruch 3, wobei der erste und der zweite Verbinderelementteil (10a, 10b) an zweiten Enden (24) davon durch ein flexibles Streifenelement (26) miteinander verbunden sind, wobei das flexible Streifenelement (26) an die beiden Verbinderelementteile (10a, 10b) anstößt und diese begrenzt, wenn das Verbinderelement in der geschlossenen Position ist, und wobei das flexible Streifenelement (26) das Verbinderelement (10) in die geschlossene Position vorspannt.

5. Baugruppe nach Anspruch 3 oder 4, wobei das erste Ende (22) des ersten Adapterteils (10a) ein Verriegelungselement (28) umfasst und wobei das erste Ende (22) des zweiten Adapterteils (10b) einen Einschnappbereich (30) umfasst, wobei das Verriegelungselement (28) und der Einschnappbereich (30) zusammen eine Schnappverbindung bilden.

6. Baugruppe nach Anspruch 4 oder 5, wobei die ersten Enden (22) des ersten und des zweiten Verbinderelementteils (10a, 10b) den zweiten Enden (24) ihres jeweiligen Verbinderelementteils (10a, 10b) gegenüberliegen.

7. Baugruppe nach einem der vorhergehenden Ansprüche, wobei das Verbinderelement (10) einen Eingriffsflansch (32) benachbart zur Außenumfangswand (18) umfasst und einen Außendurchmesser aufweist, der größer als ein Durchmesser der Außenumfangswand (18) ist.

8. Baugruppe nach einem der vorhergehenden Ansprüche, wobei das Verbinderelement (10) einen Begrenzungsflansch zum Begrenzen der Bewegung des Verbinderelements (10) in Bezug auf die Lenkstange (12) in einer axialen Richtung der Lenkstange (12) umfasst, und wobei der Begrenzungsflansch einen Innendurchmesser aufweist, der kleiner als ein Außendurchmesser des Einstellteils (14) der Lenkstange (12) ist.

9. Baugruppe nach einem der vorhergehenden Ansprüche, wobei das Verbinderelement (10) sechs Kontaktflächen (20) umfasst, die bei Betrachtung in einer axialen Richtung des Verbinderelements (10) einen hexagonalen Querschnitt des Verbinderelements (10) bilden.

10. Baugruppe nach einem der vorhergehenden Ansprüche, wobei das Verbinderelement (10) monolithisch ist.

11. Baugruppe nach Anspruch 10, wobei das Verbinderelement 3D-gedruckt ist.

12. Baugruppe nach einem der vorhergehenden Ansprüche, ferner umfassend das Lenkstangeneinstellwerkzeug (36).

13. Baugruppe nach Anspruch 12, wobei das Lenkstangeneinstellwerkzeug (36) einen Rahmen (38) mit Armen (40) umfasst, die eine U-förmige Öffnung (42) definieren, die zum Aufnehmen des Verbinderelements (10) ausgelegt ist, wobei das Lenkstangeneinstellwerkzeug (36) ferner einen Eingriffsteil (44) umfasst, der in Bezug auf den Rahmen (38) gedreht werden kann, wobei der Eingriffsteil (44) dazu ausgelegt ist, in mindestens zwei Kontaktflächen (20) des Verbinderelements (10) einzugreifen, und wobei eine Drehung des Eingriffsteils (44) in Bezug auf den Lenkstangeneinstellwerkzeugrahmen (38) dazu führt, dass das Lenkstangeneinstellwerkzeug (36) ein Moment oder Drehmoment auf das Verbinderelement (10) ausübt.

14. Baugruppe nach Anspruch 13, wobei der Eingriffsteil (44) eine Sichelform aufweist, wobei eine Innenfläche (46) des Eingriffsteils mit der Außenumfangswand (18) des Verbinderelements (10) zusammenpasst.

## Revendications

1. Ensemble configuré pour coopérer avec un outil de réglage de barre de direction (36) pour régler une longueur d'une barre de direction (12) dans un ensemble de boîtier de direction (48) d'un véhicule,
dans lequel l'ensemble comprend un élément de connecteur (10) et une barre de direction (12),
dans lequel la barre de direction (12) comprend une partie de réglage (14) qui peut tourner autour d'un axe longitudinal de barre de direction,
**caractérisé en ce que** l'élément de connecteur (10) comprend un corps (16) configuré pour être serré autour de la partie de réglage (14) de la barre de direction (12), et dans lequel l'élément de connecteur (10) a une paroi externe circonférentielle (18) comprenant une pluralité de surfaces de contact (20) sensiblement planes qui sont coudées les unes par rapport aux autres et sont configurées pour mettre en prise l'outil de réglage de barre de direction (36) de sorte que l'outil de réglage de barre de direction (36) peut appliquer un moment ou un couple sur l'élément de connecteur (10).

2. Ensemble selon la revendication 1, dans lequel l'élément de connecteur (10) a une circonférence de paroi interne (19) qui peut être adaptée pour convenir à une forme externe de la partie de réglage de barre de direction (14).

3. Ensemble selon la revendication 1 ou 2, dans lequel l'élément de connecteur (10) comprend une première et une seconde partie d'élément de connecteur (10a, 10b) qui peuvent pivoter l'une par rapport à l'autre, dans lequel l'élément de connecteur (10) a une position fermée dans laquelle l'élément de connecteur (10) est configuré pour être serré autour de la partie de réglage (14) de la barre de direction (12), et dans lequel l'élément de connecteur (10) a une position ouverte dans laquelle les premières extrémités (22) des première et seconde parties d'élément de connecteur (10a, 10b) sont espacées, dans laquelle position ouverte, l'élément de connecteur (10) peut être déplacé vers et autour de la barre de direction (12) ou à l'opposé de la barre de direction (12).

4. Ensemble selon la revendication 3, dans lequel la première et la seconde partie d'élément de connecteur (10a, 10b) au niveau de leurs secondes extrémités (24) sont assemblées par un élément de bande flexible (26), dans lequel l'élément de bande flexible (26) est attenant et confine les deux parties d'éléments de connecteur (10a, 10b), lorsque l'élément de connecteur est dans la position fermée, et dans lequel l'élément de bande flexible (26) sollicite l'élément de connecteur (10) vers la position fermée.

5. Ensemble selon les revendications 3 ou 4, dans lequel la première extrémité (22) de la première partie d'adaptateur (10a) comprend un élément de verrouillage (28), et dans lequel la première extrémité (22) de la seconde partie d'adaptateur (10b) comprend une zone d'encliquetage (30), dans lequel l'élément de verrouillage (28) et la zone d'encliquetage (30) forment, ensemble, un raccordement par encliquetage.

6. Ensemble selon la revendication 4 ou 5, dans lequel les premières extrémités (22) des première et seconde parties d'élément de connecteur (10a, 10b) sont opposées aux secondes extrémités (24) de leur partie d'élément de connecteur (10a, 10b) respective.

7. Ensemble selon l'une quelconque des revendications précédentes, dans lequel l'élément de connecteur (10) comprend une bride de mise en prise (32) adjacente à la paroi externe circonférentielle (18) et ayant un diamètre externe qui est supérieur à un diamètre de la paroi externe circonférentielle (18).

8. Ensemble selon l'une quelconque des revendications précédentes, dans lequel l'élément de connecteur (10) comprend une bride de confinement pour confiner le mouvement de l'élément de connecteur (10) par rapport à la barre de direction (12) dans une direction axiale de la barre de direction (12) et dans lequel la bride de confinement a un diamètre interne qui est inférieur à un diamètre externe de la partie de réglage (14) de la barre de direction (12).

9. Ensemble selon l'une quelconque des revendications précédentes, dans lequel l'élément de connecteur (10) comprend six surfaces de contact (20) qui, lorsqu'elles sont observées dans une direction axiale de l'élément de connecteur (10), forment une section transversale hexagonale de l'élément de connecteur (10).

10. Ensemble selon l'une quelconque des revendications précédentes, dans lequel l'élément de connecteur (10) est monolithique.

11. Ensemble selon la revendication 10, dans lequel l'élément de connecteur est imprimé en 3D.

12. Ensemble selon l'une quelconque des revendications précédentes, comprenant en outre l'outil de réglage de barre de direction (36).

13. Ensemble selon la revendication 12, dans lequel l'outil de réglage de barre de direction (36) comprend un bâti (38) ayant des bras (40) définissant une ouverture en forme de U (42) configurée pour recevoir l'élément de connecteur (10), dans lequel l'outil de réglage de barre de direction (36) comprend en outre une partie de mise en prise (44) pouvant tourner par rapport au bâti (38), dans lequel la partie de mise en prise (44) est configurée pour mettre en prise au moins deux surfaces de contact (20) de l'élément de connecteur (10), et dans lequel une rotation de la partie de mise en prise (44) par rapport au bâti d'outil de réglage de barre de direction (38) se traduit par l'outil de réglage de barre de direction (36) qui applique un moment ou un couple sur l'élément de connecteur (10).

14. Ensemble selon la revendication 13, dans lequel la partie de mise en prise (44) a une forme de croissant, dans lequel une surface interne (46) de la partie de mise en prise correspond à la paroi externe circonférentielle (18) de l'élément de connecteur (10).
